# EUROPEAN PATENT APPLICATION

(11) **EP 4 797 498 A1**
(43) Date of publication of application: **26.08.2026**
(21) Application number: 23961504.0
(22) Date of filing: 14.12.2023
(51) Int. Cl.: H02J 50/23

(54) **COIL STRUCTURE FOR WIRELESS POWER SUPPLY DEVICE**

(71) Applicant: Adtex Inc., Gunma 370-1201 (JP); Kake Educational Institution, Okayama-shi, Okayama 700-0005 (JP); National Institute of Technology, Hachioji-shi, Tokyo 193-0834 (JP)
(72) Inventor: SATO, Hiroo, Takasaki-shi, Gunma 370-1201 (JP); ISHIDA, Hiroki, Okayama-shi, Okayama 700-0005 (JP); KYODEN, Tomoaki, Imizu City, Toyama 933-0235 (JP); TAKEDA, Toru, Takasaki-shi, Gunma 370-1201 (JP); KOSHINO, Shinji, Takasaki-shi, Gunma 370-1201 (JP)
(74) Representative: Müller-Boré & Partner Patentanwälte PartG mbB
(86) International application number: PCT/JP2023/044946
(87) International publication number: WO 2025/126440

(57) **Abstract**

Provided with a higher performance coil structure for a wireless power supply device that can further increase a transmission distance and have higher transmission power efficiency.

A coil structure for a wireless power supply device, wherein two spiral coils 31, 32 are stepped coils wound multiple times from an outside toward an inside in a substantially rectangular or substantially annular shape in a state where a step is provided in a vertical direction (Z-axis direction) between a vicinity of a center and a vicinity of end portions in an X-axis direction, such that the two spiral coils are arranged on left and right (on a positive side and a negative side in the X-axis direction with a solenoid coil 33 as a center) with respect to the solenoid coil 33. Near the center of a length in the X-axis direction of a magnetic core 11 which is a portion close to the solenoid coil 33, the two spiral coils are arranged above (on the positive side in the Z-axis direction) magnetic flux passing through an inside of the magnetic core 11. Near end portions of the length in the X-axis direction of the magnetic core 11 which is a portion far from the solenoid coil 33, the two spiral coils are arranged below (on the negative side in the Z-axis direction of) the magnetic flux passing through the inside of the magnetic core 11.

## Description

### TECHNICAL FIELD

The present invention relates to a structure of a power supply side coil and/or a power receiving side coil used in a wireless power supply device.

### BACKGROUND OF THE INVENTION

Conventionally, several technologies for the contactless wireless power supply are known, including an electromagnetic induction system and a magnetic field resonance system. Among these, an electromagnetic induction wireless power supply technology is used, for example, for charging mobile phones, where coils are arranged vertically. Namely, the electromagnetic induction wireless power supply technology functions as an electrical transformer itself, where electricity flows when a power supply coil and a power receiving coil are in close contact.

However, the electromagnetic induction type wireless power supply technology has a problem that it is difficult to put into practical use because the distance between the power supply coil and the power receiving coil cannot be made large, and if the positions of the power supply coil and the power receiving coil are even slightly misaligned or separated, neither charging nor power supply can be performed.

Furthermore, the magnetic field resonance wireless power supply technology is developed at a university in U.S. around 2006 to 2007. The distance between the power supply coil and the power receiving coil can be larger compared to the electromagnetic induction system. Thus, the magnetic field resonance wireless power supply technology is at a level close to practical application. However, the electric power cannot be transmitted unless the distance between the power supply coil and the power receiving coil is kept constant and fixed. If the distance becomes closer or farther or if the angles are different, the electric power cannot be transmitted. Due to the above described sensitivity, it is also difficult to apply the magnetic field resonance wireless power supply technology into practical use.

Currently, in the wireless power supply device, a coil called a "DD coil" or "Double D coil" is known as a coil where two coils are wound in a spiral shape on a magnetic plate to increase the transmission distance and the magnetic flux generation efficiency (e.g., shown in Fig. 5 of Patent Document 1 and Patent Document 2). Furthermore, the DD coil (Double D coil) is used as the highest performance coil as an electromagnetic coil for large power transmission such as wireless power supply to an electric vehicle, for example.

### PRIOR ART DOCUMENTS

### Patent documents

Patent Document 1: Japanese Patent Application Publication No. 2014-532296
Patent Document 2: Japanese Patent Application Publication No. 2009-164293

### SUMMARY OF THE INVENTION

### Problem to be Solved by the Invention

When attempting to transmit large power with the wireless power supply device, it is necessary to generate a large magnetic flux and concentrate the magnetic flux in one direction toward the power receiving coil side. This is to increase the efficiency and to prevent the leaked magnetic flux from adversely affecting people in the surroundings. At this time, even if the transmission efficiency of the coil increases by just a little (for example, 1%), there is a large difference in the amount of heat generation. Thus, there is a demand to improve efficiency even a little. Namely, there is still a demand for a high-performance coil that can further increase the transmission distance and have higher transmission power efficiency than the conventional DD coil (Double D coil).

The present invention is made to solve the above described problems and aims to provide a higher performance coil structure for a wireless power supply device that can further increase the transmission distance and have higher transmission power efficiency.

### Means for Solving the Problem

To achieve the above described object, the present invention is a coil structure for a wireless power supply device, wherein the coil structure comprises: a magnetic core having a substantially rectangular parallelepiped-shape, the magnetic core having a left-right length in an X-axis direction as a longest side, a depth in a Y-axis direction as a second longest side and a vertical thickness in a Z-axis direction as a shortest side; two spiral coils; and one solenoid coil, the one solenoid coil is a solenoid coil wound multiple times around the magnetic core only in a vicinity of a center in the X-axis direction of the magnetic core, the two spiral coils are stepped spiral coils wound multiple times from an outside toward an inside in a substantially rectangular or substantially annular shape in a state where a step is provided in the Z-axis direction between the vicinity of the center and the vicinity of end portions in the X-axis direction so that the two spiral coils are arranged on a positive side and a negative side in the X-axis direction with the solenoid coil at the center, the two spiral coils are arranged on the positive side in the Z-axis direction compared to a magnetic flux passing through an inside of the magnetic core in the vicinity of the center in the X-axis direction of the magnetic core which is a portion close to the solenoid coil, and the two spiral coils are arranged on the negative side in the Z-axis direction compared to the magnetic flux passing through the inside of the magnetic core near the end portions in the X-axis direction of the magnetic core which is a portion far from the solenoid coil.

### Effect of the Invention

According to the coil structure for the wireless power supply device of the present invention, each of the spiral coils is provided with a step and the solenoid coil is wound between the two spiral coils. Thus, a longer transmission distance between the power supply side coil and the power receiving side coil can be maintained and the transmission power efficiency can be increased. Consequently, a higher performance wireless power supply device can be achieved. Furthermore, since the step is provided in the spiral coils, the performance of the wireless power supply device is not degraded by the lead wires of the coils. Furthermore, it becomes possible to arrange water cooling pipes for cooling the coil windings.

### BRIEF DESCRIPTION OF DRAWINGS

Figs. 1A to 1D are schematic drawings showing a total of four coil structures: three conventional coil structures and one coil structure considered as an applied type in wireless power supply devices.
Fig. 2 is an explanatory drawing comparing the performance (transmission distance and transmission power efficiency) of each of the four coil structures shown in Figs. 1A to 1D.
Fig. 3 is a drawing schematically showing a coil structure (basic type) for a wireless power supply device according to Embodiment 1 of the present invention.
Figs. 4A to 4C are explanatory drawings showing a top view, a front view and a bottom view of the coil structure for the wireless power supply device shown in Fig. 3.
Figs. 5A1, 5A2, 5B1, 5B2, 5C1 and 5C2 are schematic drawings showing examples of other possible variations based on the coil structure for the wireless power supply device shown in Fig. 3.
Figs. 6A to 6D are schematic drawings showing simulation models for comparing the performance of coils in the wireless power supply device.
Figs. 7A and 7B are explanatory drawings comparing the magnetic coupling state of the coil structure for the wireless power supply device according to Embodiment 1 of the present invention with the magnetic coupling state of the hybrid type shown in Fig. 1D.
Figs. 8A and 8B are explanatory drawings comparing the positional relationship between the magnetic flux and the coils of the coil structure for the wireless power supply device according to Embodiment 1 of the present invention with the positional relationship between the magnetic flux and the coils of the hybrid type shown in Fig. 1D.
Figs. 9A and 9B are explanatory drawings comparing the lead wires of the spiral coils of the coil structure for the wireless power supply device according to Embodiment 1 of the present invention with the lead wires of the conventional spiral coils shown in Fig. 1C.
Figs. 10A and 10B are explanatory drawings comparing the arrangement example of a water pipe for cooling the coil structure for the wireless power supply device according to Embodiment 1 of the present invention with the conventional coil structure shown in Fig. 1C.
Figs. 11A and 11B are drawings showing a specific arrangement example of the water pipe for cooling the coil structure for the wireless power supply device according to Embodiment 1 of the present invention.
Figs. 12A to 12C are schematic drawings showing the coil structure for the wireless power supply device according to Embodiment 2 of the present invention with three variations same as Figs. 5A1, 5A2, 5B1, 5B2, 5C1 and 5C2.
Figs. 13A to 13E are explanatory drawings showing how to make the coil structure for the wireless power supply device according to Embodiment 2 of the present invention.
Figs. 14A to 14D are explanatory drawings showing how to wind the coils of the coil structure for the wireless power supply device according to Embodiment 2 of the present invention.
Figs. 15A to 15C are explanatory drawings showing how to attach the magnetic pole plates of the coil structure for the wireless power supply device according to Embodiment 2 of the present invention.
Figs. 16A to 16D are explanatory drawings showing the positional relationship between the magnetic flux passing through the inside of the ferrite core and the coils in the coil structures for the wireless power supply device according to Embodiments 1 and 2 of the present invention.

### MODES FOR CARRYING OUT THE INVENTION

The present invention relates to a structure of a power supply side coil and/or a power receiving side coil used in a wireless power supply device. Namely, the present invention relates to a coil structure for a wireless power supply device. Hereinafter, embodiments of the present invention will be explained in detail with reference to the drawings.

First, the wireless power supply technology will be explained. As for the wireless power supply technology, several technologies are already known including electromagnetic induction type and magnetic field resonance type. Among these, an electromagnetic induction wireless power supply technology is used, for example, for charging mobile phones, where coils are arranged vertically. Namely, based on the same principle as a transformer, the electric power can be transmitted only when the distance (transmission distance) between the power supply coil and the power receiving coil is very close.

However, the electromagnetic induction type wireless power supply technology has a problem that it is difficult to put into practical use because the transmission distance is as short as several mm. Thus, the distance between the power supply coil and the power receiving coil cannot be made large. If the positions of the power supply coil and the power receiving coil are even slightly misaligned or separated, neither charging nor power supply can be performed. Namely, it is vulnerable to positional misalignment and it is difficult to put the electromagnetic induction type wireless power supply technology into practical use.

In the magnetic field resonance wireless power supply technology, the transmission distance is long (e.g., several centimeters to several meters). The distance between the power supply coil and the power receiving coil can be larger compared to the electromagnetic induction system. Thus, the magnetic field resonance wireless power supply technology is at a level close to practical application. However, the electric power cannot be transmitted unless the distance between the power supply coil and the power receiving coil is kept constant and fixed. If the distance becomes closer or farther or if the angles are different, the transmission efficiency decreases and necessary power cannot be transmitted. Due to the above described sensitivity (i.e., vulnerable to the positional displacement), it is also difficult to apply the magnetic field resonance wireless power supply technology into practical use.

Furthermore, for example, Patent Document 1 discloses a coil called a "DD coil" or "Double D coil" as a coil where two coils are wound in a spiral shape on a magnetic plate to increase the transmission distance and the magnetic flux generation efficiency in the wireless power supply device.

However, when attempting to transmit large power with a wireless power supply device, it is necessary to generate a large magnetic flux and concentrate the magnetic flux in one direction toward the power receiving coil side. This is to increase the efficiency and to prevent the leaked magnetic flux from adversely affecting people in the surroundings. At this time, even if the transmission efficiency of the coil increases by just a little (for example, 1%), there is a large difference in the amount of heat generation. Thus, there is a demand to improve efficiency even a little. Namely, there is still a demand for a high-performance coil that can further increase the transmission distance and has higher transmission power efficiency than the conventional DD coil (Double D coil).

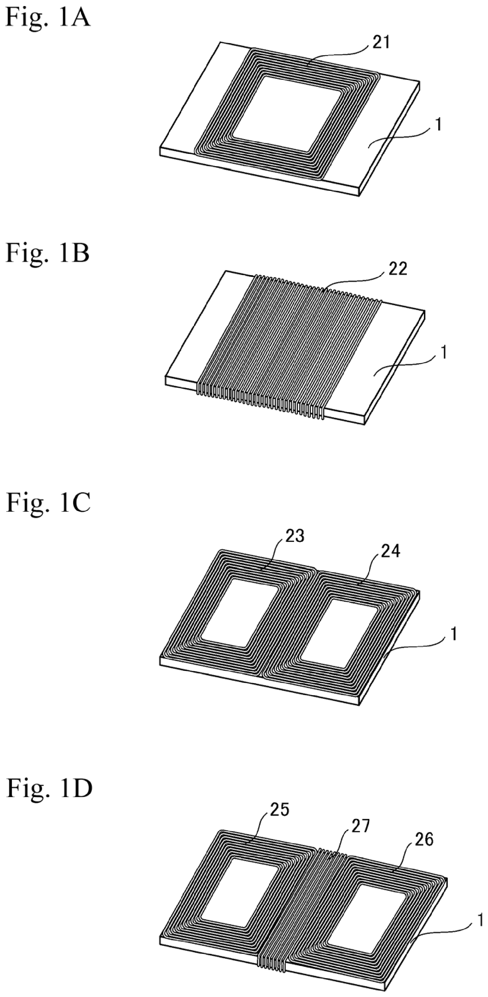

First, the applicant of the present application conducted the experiments to compare the transmission distance and the transmission power efficiency of existing coil structures in the wireless power supply device. Figs. 1A to 1D are schematic drawings showing a total of four coil structures: three conventional coil structures and one coil structure considered as an applied type in wireless power supply devices.

Fig. 1A is a coil structure in which a coil 21 (spiral coil 21) is arranged in a spiral shape on the top of a ferrite core 1 which is a magnetic material. This is a type of conventional coil structure which will be called a "single spiral type" in the wireless power supply device. The single spiral type coil structure is used, for example, in the wireless power supply device for charging mobile information terminals such as a smartphone.

Fig. 1B is a coil structure in which a coil 22 (solenoid coil 22) is wound in a solenoid shape around a ferrite core 1 which is a magnetic material with the ferrite core 1 as an axis. This is also a type of conventional coil structure which will be called a "solenoid type" in the wireless power supply device.

Fig. 1C is a coil structure in which spiral coils 23 and 24 (planar spiral coils 23, 24 constituting a double spiral) are arranged in double on the top of a ferrite core 1 which is a magnetic material. This is also a type of conventional coil structure which will be called a "double spiral type" in the wireless power supply device. The double spiral type coil structure is the same as the DD coil (Double D coil) disclosed in Patent Document 1, for example.

Fig. 1D is a coil structure in which two spiral coils 25 and 26 (planar spiral coils 25, 26 constituting a double spiral) are arranged slightly separated on the top of a ferrite core 1 which is a magnetic material, similar to the double spiral type of Fig. 1C. Between the two coils 25, 26, a solenoid coil 27 (solenoid coil 27) is arranged in a state of being wound around with the ferrite core 1 as an axis, similar to Fig. 1B.

The coil structure of Fig. 1D is a coil structure considered by the applicant of the present application as an applied type, which will be called a "hybrid type." Namely, the three structures of Figs. 1A to 1C are conventional coil structures already in use. Fig. 1D is a coil structure considered by the applicant of the present application as an applied type.

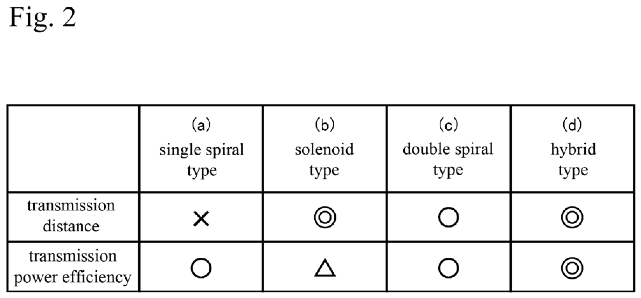

Fig. 2 is an explanatory drawing comparing the performance (transmission distance and transmission power efficiency) of each of the four coil structures shown in Figs. 1A to 1D. The symbols in Fig. 2 are relative evaluations, with symbols assigned in order of superior performance: double circle, circle, triangle and cross.

As shown in Fig. 2, the single spiral type coil structure of Fig. 1A has a small transmission distance (cross) and can only supply power when very close, but the transmission power efficiency is good (circle). Conversely, the solenoid type coil structure of Fig. 1B has no problem even at quite a distance for transmission distance (double circle), but the transmission power efficiency is not very good (triangle). On the other hand, the double spiral type coil structure of Fig. 1C is good (circle) even at a relatively long transmission distance, and the transmission power efficiency is also good (circle).

However, in the case of the hybrid type coil structure of Fig. 1D, the result was that there is no problem (double circle) even at quite a distance for transmission distance, and the transmission power efficiency is also quite high (double circle).

From the above described results, it was found that it is possible to provide a high-performance coil that can increase the transmission distance more than the conventional DD coil (Double D coil) and have higher transmission power efficiency by making a hybrid type coil structure that combines the double spiral type and the solenoid type.

In the present invention, the coil structure shown in Fig. 1D is further evolved to propose a coil structure for a wireless power supply device that can further increase the transmission distance and have higher transmission power efficiency than the double spiral type coil structure (conventional DD coil, i.e., Double D coil) shown in Fig. 1C or the hybrid type coil structure shown in Fig. 1D.

### Embodiment 1

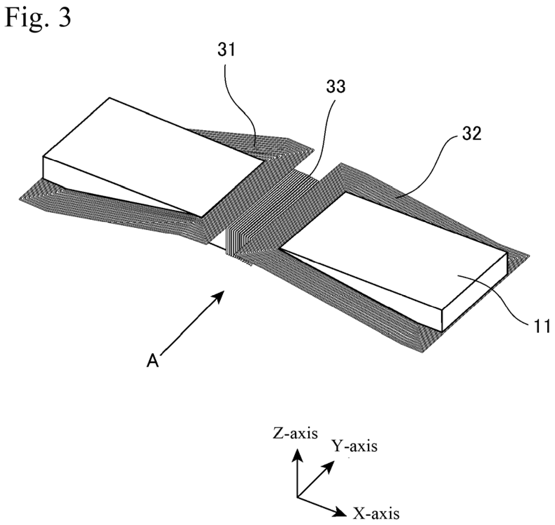

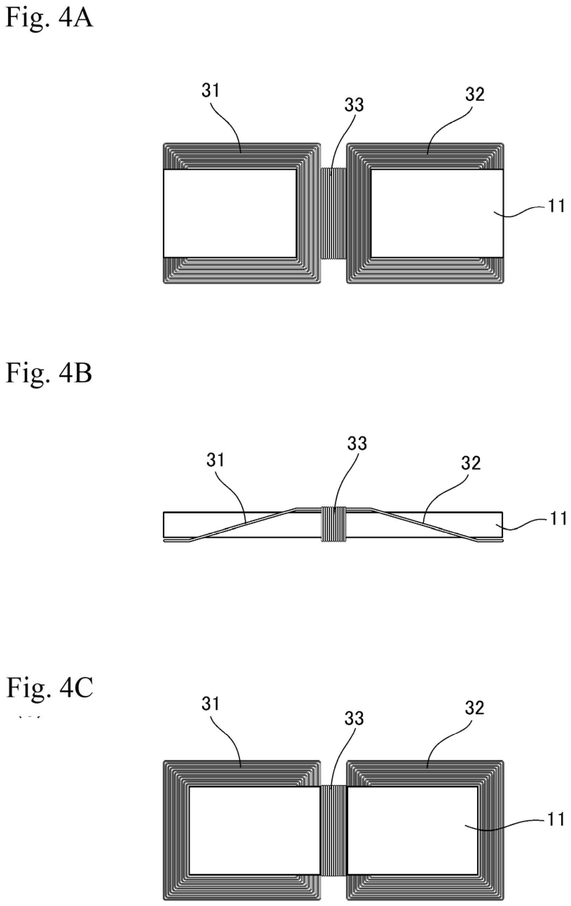

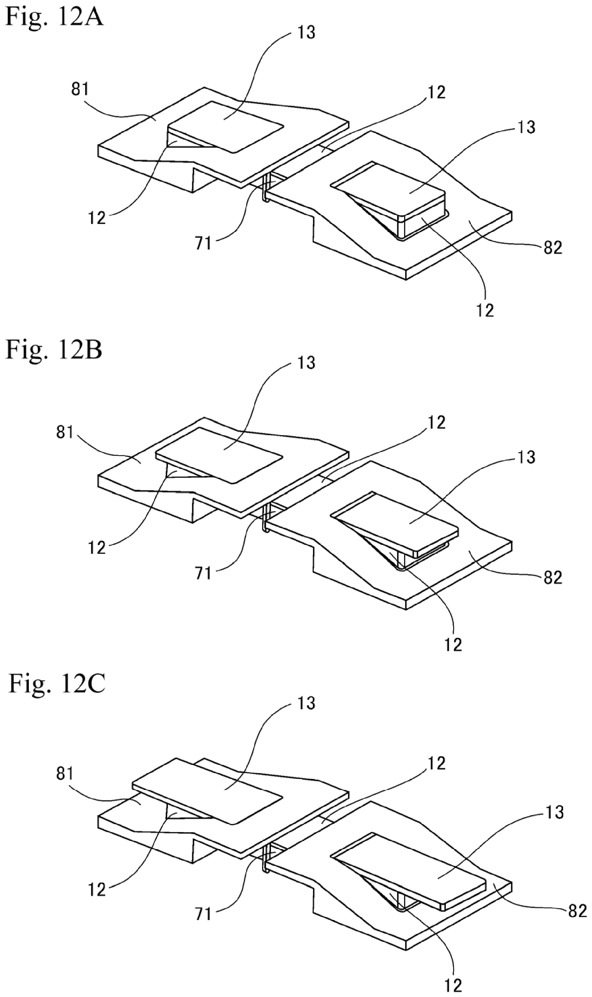

Fig. 3 is a drawing schematically showing a coil structure (basic type) for a wireless power supply device according to Embodiment 1 of the present invention. In the schematic drawing shown in Fig. 3, a winding frame (shown in Figs. 12A to 12C described later) made of resin for winding the coils is not shown, and only a ferrite core (magnetic core) which is a magnetic material and coil windings are shown. Furthermore, Figs. 4A to 4C are explanatory drawings showing a top view, a front view and a bottom view of the coil structure for the wireless power supply device shown in Fig. 3. Fig. 4B is a front view seen from the direction of arrow A in Fig. 3, Fig. 4A is a top view seen from directly above, and Fig. 4C is a bottom view seen from below.

As shown in Fig. 3 and Figs. 4A to 4C, the coil structure for the wireless power supply device of the present invention has two spiral coils 31, 32 (stepped spiral coils 31, 32 constituting a double spiral) wound diagonally from the top to the bottom of a ferrite core (magnetic core) 11 which is a magnetic material. The two coils 31, 32 are arranged in a slightly separated state. One solenoid coil 33 (solenoid coil 33) is arranged between the two coils 31, 32 in a state of being wound around with the ferrite core 11 as an axis.

Explaining in a little more detail, as shown in Fig. 3, the ferrite core 11 is a magnetic material having substantially rectangular parallelepiped-shape and having a left-right length in the X-axis direction as the longest side, a depth in the Y-axis direction as the second longest side and a vertical thickness in the Z-axis direction as the shortest side. Note that the X-axis, Y-axis and Z-axis directions are shown only in Fig. 3 and are omitted in other figures. However, the X-axis, Y-axis and Z-axis are defined in the same way as in Fig. 3 in other figures as well. Namely, the explanation of vertical direction (e.g., top or bottom) is the explanation of whether it is on the positive side or negative side in the Z-axis direction.

Furthermore, the reason for adding "substantially" as in "a magnetic material having a substantially rectangular parallelepiped-shaped" is to mean that it does not need to be a strict rectangular parallelepiped as long as it looks roughly like a rectangular parallelepiped as a whole. For example, each corner of the rectangular parallelepiped shape may be slightly rounded or the intersecting edges may intersect slightly at an angle rather than being exactly perpendicular.

The coil structure for the wireless power supply device according to Embodiment 1 of the present invention comprises at least the ferrite core 11, two spiral coils 31, 32 and one solenoid coil 33 as shown in Fig. 3 and Figs. 4A to 4C. In Embodiment 1, the structure where the two spiral coils 31, 32 and the solenoid coil 33 are formed by one coil winding is explained. However, the structure is not limited to the above described structure.

Here, the two spiral coils 31, 32 are spiral coils constituting a double spiral. In Fig. 3 and Figs. 4A to 4C, the coil 31 is arranged on the left side and the coil 32 is arranged on the right side among the two coils 31, 32. The left coil 31 is arranged in a state where a step is provided in the Z-axis direction such that the inside of coil 31 (the side close to the right coil 32) is located above the ferrite core 11 (on the positive side in the Z-axis direction) and the outside (the side farthest from the right coil 32) is located below the ferrite core 11 (on the negative side in the Z-axis direction). The right coil 32 is arranged in a state where a step is provided in the Z-axis direction such that the inside of coil 32 (the side close to the left coil 31) is located above the ferrite core 11 (on the positive side in the Z-axis direction) and the outside (the side farthest from the left coil 31) is located near the bottom of the ferrite core 11 (on the negative side in the Z-axis direction).

The two stepped spiral coils 31, 32 are arranged in a slightly separated state in the X-axis direction. One solenoid coil 33 is arranged between the two spiral coils 31, 32 in a state of being wound multiple times around the ferrite core 11 with the ferrite core 11 as an axis so that the coils do not overlap each other in the Y-axis direction and the Z-axis direction.

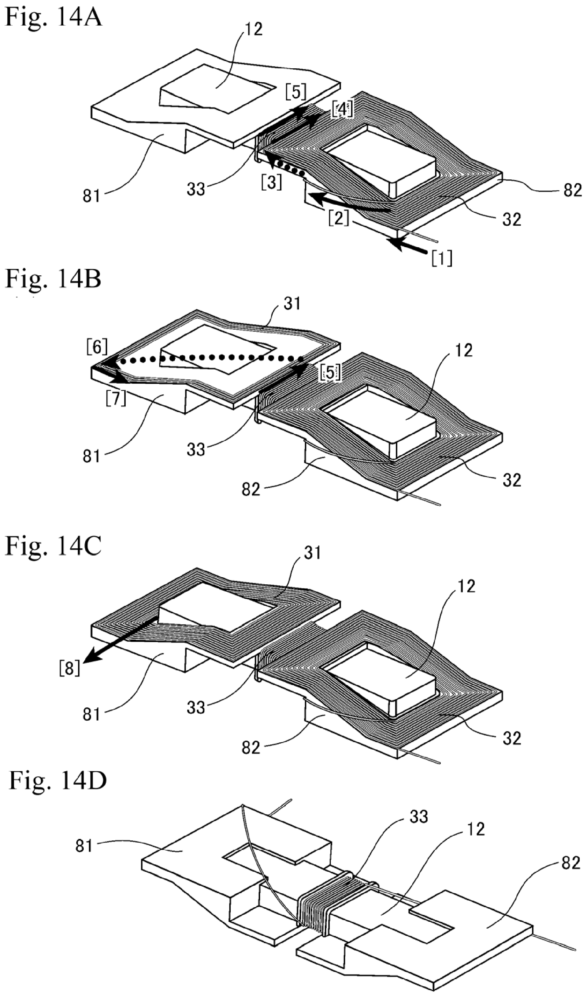

As a result, as can be seen from Fig. 4B, the coil structure for the wireless power supply device of the present invention has the spiral coil 31 wound diagonally from near the center top to near the left end bottom of the ferrite core 11 which is a magnetic material, the spiral coil 32 wound diagonally from near the center top to near the right end bottom of the ferrite core 11, and the solenoid coil 33 wound around the ferrite core 11 (from top to bottom) with the ferrite core 11 as an axis between the two coils 31, 32. Furthermore, the spiral coils 31, 32 are wound multiple times in a substantially rectangular or substantially annular shape from the outside toward the inside so that the coils do not overlap each other in the Z-axis direction. Note that the winding method of the coils will be described later with reference to Figs. 14A to 14D.

Furthermore, the reason for adding "substantially" as in "substantially rectangular or substantially annular" is to mean that there is no problem even if the coil becomes a rectangular shape (substantially rectangular shape) with slightly rounded corners rather than a perfect rectangle when the coil is wound in a rectangular shape or even if the coil is somewhat close to an ellipse rather than a perfect circle when the coil is wound round because the coil has thickness. This means that it is sufficient if the coil is wound multiple times from the outside toward the inside and becomes roughly rectangular or roughly annular as a whole.

Here, the solenoid coil 33 is explained as being wound in multiple rows (multiple columns) only in the X-axis direction, with only one row in the Y-axis and Z-axis directions without the coils overlapping each other. However, depending on the size of the entire coil and the influence of the output voltage value, the solenoid coil 33 may be wound in two or three layers in the Y-axis or the Z-axis direction as well. Namely, the solenoid coil 33 may be "only one row in the X-axis direction, multiple rows (multiple columns) in the Y-axis and Z-axis directions," or "only multiple rows (multiple columns) in the X-axis direction, only one row in the Y-axis and Z-axis directions," or "multiple rows (multiple columns) in the X-axis direction, and also multiple rows (multiple columns) in the Y-axis and Z-axis directions."

In other words, the solenoid coil 33 may be wound in any way as long as the solenoid coil 33 is wound multiple times around the ferrite core 11 only near the center of the length in the X-axis direction of the ferrite core 11. Furthermore, regarding the spiral coils 31, 32, the coils may overlap each other in the Z-axis direction as well. However, when coils are stacked in layers, there are problems that dielectric breakdown is likely to occur causing failures and troubles, and that the transmission distance becomes shorter when the overall thickness of the coil increases. Thus, it is desirable that both the solenoid coil 33 and the spiral coils 31, 32 are wound as shown in the embodiment of the invention.

As described above, the one solenoid coil 33 is a solenoid coil wound multiple times around the ferrite core 11 only near the center of the length in the X-axis direction of the ferrite core 11. Furthermore, the two spiral coils 31, 32 are arranged on the left and right (i.e., on the left and right of the solenoid coil 33, on the positive side and the negative side in the X-axis direction with the solenoid coil 33 as the center) with respect to the solenoid coil 33, and are arranged on the top of the ferrite core 11 (on the positive side in the Z-axis direction) in portions close to the solenoid coil 33 (i.e., near the center of the length in the X-axis direction of the ferrite core 11) and are arranged near the bottom of the ferrite core 11 (on the negative side in the Z-axis direction) in portions far from the solenoid coil 33 (i.e., near the end portions of the length in the X-axis direction of the ferrite core 11) so that a step is provided in the vertical direction (Z-axis direction) between the vicinity of the center and the vicinity of the end portions in the X-axis direction and the two spiral coils 31, 32 are stepped spiral coils wound multiple times from the outside toward the inside in a substantially rectangular or substantially annular shape.

In Embodiment 1, it is explained that the two spiral coils 31, 32 are arranged symmetrically with respect to the solenoid coil 33 on the left and right (on the positive side and negative side in the X-axis direction with the solenoid coil 33 as the center) of the solenoid coil 33. However, the two spiral coils 31, 32 do not need to be completely symmetrical as long as they are arranged on the left and right of the solenoid coil 33. For example, the spiral coil 31 and the spiral coil 32 may differ in the number of windings, or in whether they are substantially rectangular or substantially annular in shape.

Here, it is explained that one coil winding is wound in the order of one of the two spiral coils (here, the spiral coil 32), the solenoid coil 33, and the other of the two spiral coils (here, the spiral coil 31) for constituting the coil structure for the wireless power supply device. However, in addition to connecting the three coils in series, the two spiral coils 31, 32 may be connected in parallel and the solenoid coil 33 may be directly connected to the spiral coils 31, 32. Note that the details of the method of winding the coil will be explained in Embodiment 2 described later.

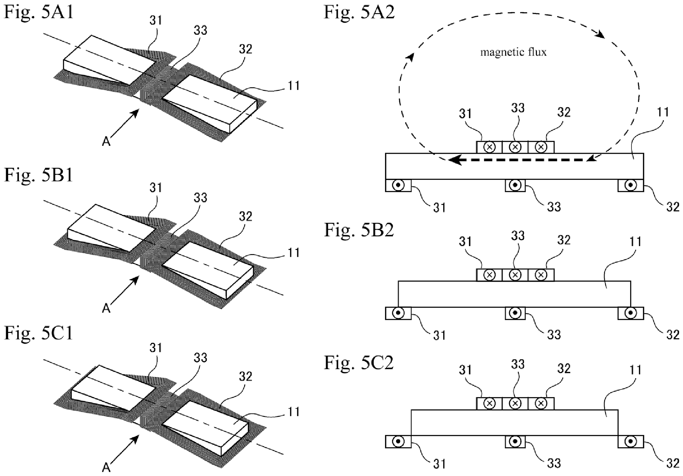

Here, as described above, although the connection method of the three coils (parallel connection or series connection) may be any method, it is important that the direction of the current flowing through the coils is such that the magnetic fluxes generated by the three coils (the two spiral coils 31, 32 and the solenoid coil 33 between them) strengthen each other, as shown in Figs. 5A1, 5A2, 5B1, 5B2, 5C1 and 5C2. The three coils are bound and energized so that the above described principle is maintained. As a result, as shown in Figs. 5A1, 5A2, 5B1, 5B2, 5C1 and 5C2, all the coils arranged on the top of the ferrite core 11 are wound so that current flows in the same one direction, and all the coils arranged on the bottom of the ferrite core 11 are also wound so that current flows in the same one direction (however, in the opposite direction to the coils arranged on the top).

Figs. 5A1, 5A2, 5B1, 5B2, 5C1 and 5C2 are schematic drawings showing examples of other possible variations based on the coil structure for the wireless power supply device shown in Fig. 3. The three types of variations shown in Figs. 5A1, 5A2, 5B1, 5B2,5C1 and 5C2differ only in the length in the left-right direction (X-axis direction) of the ferrite core 11.

Figs. 5A1 is the same as Fig. 3, and 5A2is a cross-sectional view of the portion indicated by the dash-dotted line inFigs. 5A1 seen from the direction of the arrow A. Here, the cross mark inside the circle mark in the cross-section of the coil indicates that the direction of the current flowing through the coil is the same direction as the arrow A (from front to back in the example of 5A2), and the black circle mark inside the circle mark indicates that the direction of the current flowing through the coil is opposite to the arrow A (from back to front in the example of 5A2).

Furthermore, in 5A2, the magnetic flux (magnetic field lines) in the coil structure is shown by dashed arrows. For the arrangement of the coils with respect to the ferrite core 11 to form the above described annular magnetic flux, all the coils arranged on the top of the ferrite core 11 need to be wound so that current flows in the same one direction, and all the coils arranged on the bottom of the ferrite core 11 also need to be wound so that current flows in the same one direction (however, in the opposite direction to the coils arranged on the top).

Fig. 5B1 and Fig. 5C1 have structures slightly different from Fig. 5A1. Fig. 5B2 is a cross-sectional view of the portion indicated by the dash-dotted line in Fig. 5B1 seen from the direction of the arrow A. Fig. 5C2 is a cross-sectional view of the portion indicated by the dash-dotted line in Fig. 5C1 seen from the direction of the arrow A.

As shown in Figs. 5A1, 5A2, 5B1, 5B2, Fig. 5C1 and 5C2, the length in the left-right direction (X-axis direction) of the ferrite core 11 in5B1 is slightly shorter than the ferrite core 11 in Figs. 5A1 (shown in 5B2). In addition, the length in the left-right direction (X-axis direction) of the ferrite core 11 in Fig. 5C1 is slightly shorter than the ferrite core 11 in 5B1 (shown in 5C2).

Here, it will be explained that the coil structure for the wireless power supply device according to Embodiment 1 of the present invention shown in Figs. 3 to 5C2 can increase the transmission distance and the transmission power efficiency more than the double spiral type coil structure (conventional DD coil, i.e., Double D coil) shown in Fig. 1C and the hybrid type coil structure shown in Fig. 1D.

In the wireless power supply device, the transmission distance between the power supply side coil and the power receiving side coil can be increased because the magnetic coupling coefficient k is large, and the transmission efficiency is high because the Q value representing the quality factor of the coil is high. Namely, the product (k×Q) of the magnetic coupling coefficient k and the coil quality factor Q value is the figure of merit of the coil.

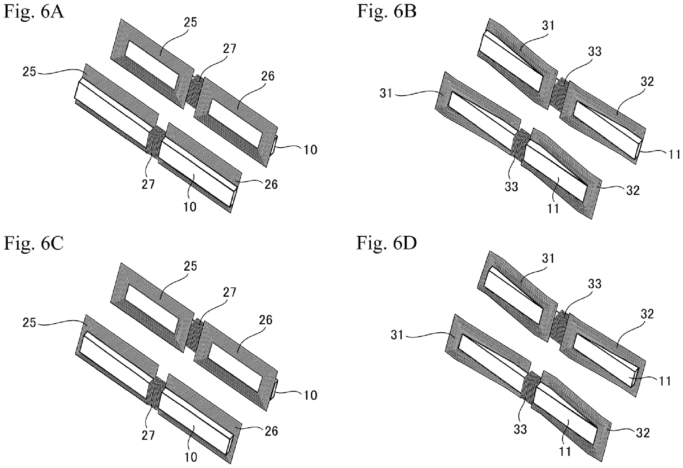

Figs. 6A to 6D are schematic drawings showing simulation models for comparing the performance of coils in the wireless power supply device. In the experiments and simulations actually conducted using the simulation models shown in Figs. 6A to 6D, copper was used as the material for the coils, and soft ferrite, which is a soft magnetic material, was used as the material for the ferrite core (magnetic material). However, when the frequency is low (e.g., 10 kHz or less), a silicon steel sheet, an iron-based microcrystalline sheet, an iron-based amorphous alloy sheet and the like may be used.

Fig. 6A is a variation of the hybrid type coil structure shown in Fig. 1D. Compared to Fig. 1D, a ferrite core 10 with a slightly shorter length in the depth direction (Y-axis direction) is used. The length in the left-right direction (X-axis direction) of the ferrite core 10 is 300 mm, the thickness in the Z-axis direction of the ferrite core 10 is 10 mm, the frequency is 50 kHz, the wire diameter of the coil is 3.83 mm, the number of windings of the two pairs of opposing spiral coils 25, 26 is 8 turns, the length is 2.79 m, the number of windings of the solenoid coil 27 is 5 turns, and the length is 0.877 m.

On the other hand, Fig. 6B is the coil structure according to Embodiment 1 of the present invention shown in Fig. 3 and Fig. 5A1. The length in the left-right direction (X-axis direction) of the ferrite core 11 is 300 mm, the thickness in the Z-axis direction of the ferrite core 11 is 10 mm, the frequency is 50 kHz, the wire diameter of the coil is 3.83 mm, the number of windings of the solenoid coil 33 is 5 turns, the length is 0.877 m, and the number of windings of the two opposing spiral coils 31, 32 is 8 turns. The above described configurations are the same as shown in Fig. 6A, but the length of the two pairs of opposing spiral coils 31, 32 is 3.17 m. This is because the length becomes longer than the length of the spiral coils 25, 26 shown in Fig. 6A since the stepped spiral coils 31, 32 are used.

Here, if the voltage on the power supply side is V1, the voltage on the power receiving side is V2, the number of coil windings on the power supply side is N1 and the number of coil windings on the power receiving side is N2, the magnetic coupling coefficient k can be expressed by the formula k = (V2/V1) × (N1/N2). A simulation was conducted by applying each of the numerical values to the above described formula.

As a result, in the case of the coil structure shown in Fig. 6A, the magnetic coupling coefficient k = 0.187, the coil quality factor Q value = 1090, and k×Q = 204. On the other hand, in the case of the coil structure shown in Fig. 6B, the magnetic coupling coefficient k = 0.191, the coil quality factor Q value = 1529, and k×Q = 292. Namely, it was confirmed by calculation that the coil structure according to Embodiment 1 of the present invention can maintain a longer transmission distance between the power supply side coil and the power receiving side coil, increase the transmission power efficiency, and achieve a higher performance wireless power supply device.

Furthermore, Fig. 6C is a variation of the hybrid type coil structure shown in Fig. 6A. Compared to Fig. 6A, the length in the left-right direction (X-axis direction) of the ferrite core 10 is slightly shorter. Here, the length in the left-right direction (X-axis direction) of the ferrite core 10 shown in Fig. 6C is 270 mm, the thickness in the Z-axis direction of the ferrite core 10 is 10 mm, the frequency is 50 kHz, the wire diameter of the coil is 3.83 mm, the number of windings of the two opposing spiral coils 25, 26 is 8 turns, the length is 2.79 m, the number of windings of the solenoid coil 27 is 5 turns, and the length is 0.877 m. Namely, compared to Fig. 6A, everything is the same except for the length in the left-right direction of the ferrite core 10.

On the other hand, Fig. 6D is the coil structure according to Embodiment 1 of the present invention shown in Fig. 5B1, and the length in the left-right direction (X-axis direction) of the ferrite core 11 is 270 mm. Furthermore, the thickness in the Z-axis direction of the ferrite core 11 is 10 mm, the frequency is 50 kHz, the wire diameter of the coil is 3.83 mm, the number of windings of the solenoid coil 33 is 5 turns, the length is 0.877 m, and the number of windings of the two opposing spiral coils 31, 32 is 8 turns. The above described configurations are the same as shown in FIG. 6C. However, the length of the two opposing spiral coils 31, 32 is 3.17 m. Namely, compared to Fig. 6C, everything is the same except for the length in the left-right direction of the ferrite core 11.

In the case of the coil structure shown in Fig. 6C, the magnetic coupling coefficient k = 0.184, the coil quality factor Q value = 1088, and k×Q = 201. On the other hand, in the case of the coil structure shown in FIG. 6D, the magnetic coupling coefficient k = 0.184, the coil quality factor Q value = 1276, and k×Q = 235. Even in this case, it was confirmed by calculation that the coil structure according to Embodiment 1 of the present invention can achieve a higher performance wireless power supply device.

As described above, the experiments and simulations were also conducted for the variation of the coil structure shown in Figs. 5A1, 5A2, 5B1, 5B2, 5C1 and 5C2 (i.e., when using the ferrite core 11 with a shortened length in the left-right direction (X-axis direction) by cutting both end portions in the X-axis direction of the ferrite core 11) and the transmission distance and transmission power efficiency were confirmed, and it was confirmed that the above described structure also had sufficiently high performance. Furthermore, it was confirmed that higher performance can be achieved by adjusting the length in the left-right direction (X-axis direction) of the ferrite core in the above described way.

Note that the experiments and simulations were conducted not only when both the power supply side coil and the power receiving side coil of the wireless power supply device were the coil structure for the wireless power supply device according to Embodiment 1 of the present invention, but also when only either the power supply side coil or the power receiving side coil was the coil structure for the wireless power supply device according to Embodiment 1 of the present invention, and it was confirmed that higher performance can be performed similarly even in that case.

However, when both the power supply side coil and the power receiving side coil are the coil structure for the wireless power supply device according to Embodiment 1 of the present invention, not only can even higher performance be achieved, but there are also advantages in terms of magnetic coupling.

Here, regarding the magnetic coupling state of the coil structure for the wireless power supply device, it will be explained that the coil structure for the wireless power supply device according to Embodiment 1 of the present invention shown in Figs. 3 to 5C2 is superior when used for the power supply side coil and the power receiving side coil compared to the double spiral type coil structure (conventional DD coil, i.e., Double D coil) shown in Fig. 1C or the hybrid type coil structure shown in FIG. 1D.

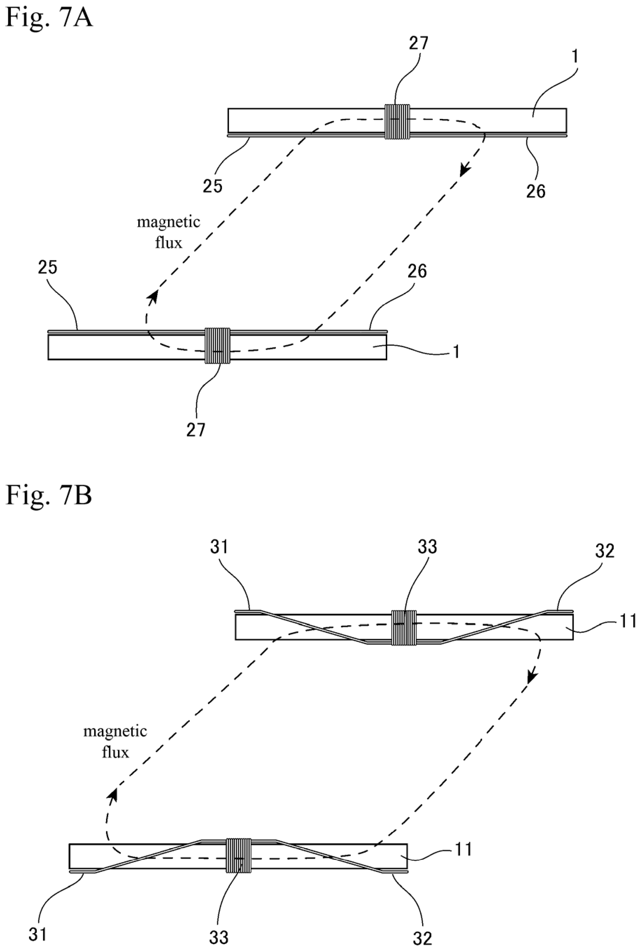

Figs. 7A and 7B are explanatory drawings comparing the magnetic coupling state of the coil structure for the wireless power supply device according to Embodiment 1 of the present invention with the magnetic coupling state of the hybrid type shown in Fig. 1D. Fig. 7A is a drawing showing an example in which two hybrid type power supply side coils and power receiving side coils shown in Fig. 1D are arranged. Fig. 7A corresponds to Fig. 6A, but shows a state where the positions of the two coils are misaligned. In this case, the portion of the surface (top surface) of the ferrite core 1 that can be seen facing each other (hereinafter referred to as "magnetic pole") can be used for magnetic coupling, but as shown in Fig. 7A, only the vicinity of the center in the left-right direction (longitudinal direction of the ferrite core 1) of each coil can be used as a magnetic pole, and the magnetic flux loop generated between the two coils is in the range shown by the dashed arrows in Fig. 7A.

On the other hand, Fig. 7B is a drawing showing an example in which two power supply side coils and power receiving side coils are arranged for the coil structure for a wireless power supply device according to Embodiment 1 of the present invention. Similar to Fig. 7A, Fig. 7B corresponds to Fig. 6B and shows a state where the positions of the two coils are misaligned. Since Figs. 7A and 7B correspond to Figs. 6A and 6B, it may be easier to understand by looking at Figs. 6A and 6B, but it can be seen that the magnetic poles, which are the portions where the ferrite core 11 can be seen facing each other from the surface (top surface) of each coil, are longer in the longitudinal direction (X-axis direction) of the coil in Fig. 7B than in Fig. 7A. In this case, the length that can tolerate positional misalignment in the longitudinal direction (X-axis direction) of the two coils is extended. If the magnetic poles are made longer, the length that can tolerate positional misalignment becomes longer. Namely, as shown by the dashed arrows in the magnetic flux loop in Fig. 7B, everything up to the ends in the longitudinal direction (X-axis direction) of the ferrite core 11 can be used for magnetic coupling. Thus, there is an advantage that it is also strong against positional misalignment of the coils.

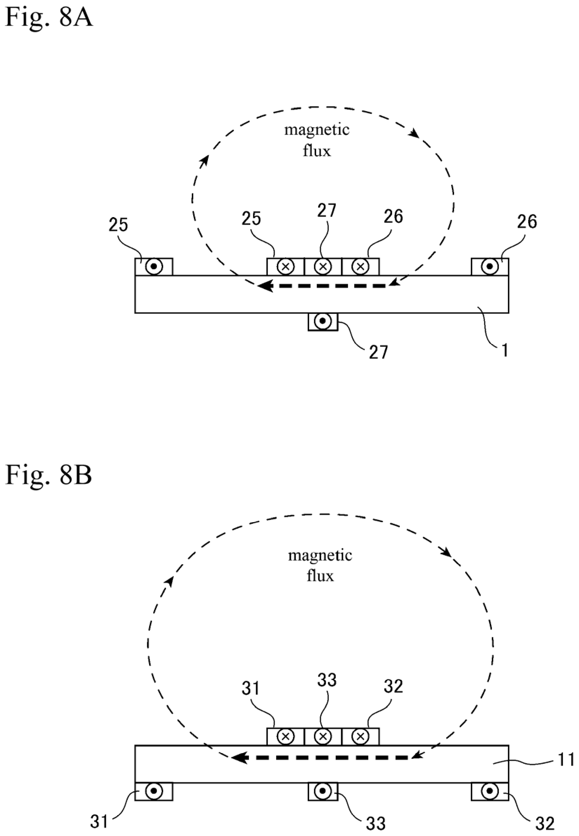

Furthermore, it will be explained here that the coil structure for the wireless power supply device according to Embodiment 1 of the present invention is stronger against transmission distance and positional misalignment than conventional ones, from the relationship between the direction of the magnetic flux and the arrangement of coils. Figs. 8A and 8B are explanatory drawings comparing the positional relationship between the magnetic flux and the coils of the coil structure for the wireless power supply device according to Embodiment 1 of the present invention with the positional relationship between the magnetic flux and the coils of the hybrid type shown in Fig. 1D.

Fig. 8A shows the positional relationship between the magnetic flux and the coils in the hybrid type coil structure shown in Fig. 1D using a cross-sectional view of the portion indicated by the dash-dotted line in Fig. 5A1 seen from the direction of arrow A, similar to Fig. 5A2. Here, the arrows shown by dashed lines indicate the magnetic flux, and the coils marked with the black circle mark inside the circle mark at both left and right ends (i.e., the spiral coils with current flowing from the back to the front of the figure) are both arranged on the upper side (i.e., on the positive side in the Z-axis direction) of the magnetic flux passing through the inside of the ferrite core 1 (arrows shown by thick dashed lines).

On the other hand, Fig. 8B shows the positional relationship between the magnetic flux and the coils in the coil structure for the wireless power supply device according to Embodiment 1 of the present invention using a cross-sectional view of the portion indicated by the dash-dotted line in Fig. 5A1 seen from the direction of arrow A, similar to Fig. 5A2. Here, similar to Fig. 8A, the arrows shown by dashed lines indicate the magnetic flux. However, in Fig. 8B, the coils marked with the black circle mark inside the circle mark at both left and right ends (i.e., the spiral coils with current flowing from the back to the front of the figure) are both arranged on the lower side (i.e., on the negative side in the Z-axis direction) of the magnetic flux passing through the inside of the ferrite core 11 (arrows shown by thick dashed lines).

When comparing Fig. 8A and Fig. 8B, as can be seen from the difference in the magnitude of the magnetic flux (magnetic field lines) shown by dashed arrows, in the case of the coil arrangement as in Fig. 8A, the spiral coils themselves obstruct and narrow the exit (magnetic pole) of the magnetic flux. However, as shown in Fig. 8B, by arranging the coils at both ends of the spiral coils on the lower side (negative side in the Z-axis direction) of the magnetic flux passing through the inside of the ferrite core 11 (arrows shown by thick dashed lines), the exit (magnetic pole) of the magnetic flux can be widened. Thus, there is an advantage that it becomes stronger against transmission distance and positional misalignment of the two coils.

Namely, in the above explanation, the two spiral coils 31, 32 are arranged on the left and right (i.e., on the positive side and negative side in the X-axis direction with the solenoid coil 33 as the center) with respect to the solenoid coil 33. In portions close to the solenoid coil 33 (i.e., near the center of the length in the X-axis direction of the ferrite core 11), the two spiral coils 31, 32 are arranged on the top of the ferrite core 11 (on the positive side in the Z-axis direction). In portions far from the solenoid coil 33 (i.e., near the end portions of the length in the X-axis direction of the ferrite core 11), the two spiral coils 31, 32 are arranged near the bottom of the ferrite core 11 (on the negative side in the Z-axis direction). Thus, a step is provided in the vertical direction (Z-axis direction) between the vicinity of the center and the vicinity of the end portions in the X-axis direction, and the two spiral coils 31, 32 are stepped spiral coils wound multiple times from the outside toward the inside in a substantially rectangular or substantially annular shape. However, regarding the step, the following explanation more clearly captures the characteristics.

The two spiral coils 31, 32 are stepped spiral coils wound multiple times from the outside toward the inside in a substantially rectangular or substantially annular shape, such that a step is provided in the vertical direction (Z-axis direction) between the vicinity of the center and the vicinity of the end portions in the X-axis direction. The two spiral coils 31, 32 are arranged on the left and right (on the positive side and the negative side in the X-axis direction with the solenoid coil 33 as the center) with respect to the solenoid coil 33. Near the center of the length in the X-axis direction of the ferrite core 11, which is a portion close to the solenoid coil 33, the two spiral coils 31, 32 are arranged above (on the positive side in the Z-axis direction of) the magnetic flux passing through the inside of the ferrite core 11. Near the end portions of the length in the X-axis direction of the ferrite core 11, which is a portion far from the solenoid coil 33, the two spiral coils 31, 32 are arranged below (on the negative side in the Z-axis direction of) the magnetic flux passing through the inside of the ferrite core 11.

Regarding the lead wires of the spiral coils 31, 32, it will be explained that the coil structure for the wireless power supply device according to Embodiment 1 of the present invention shown in Figs. 3 to 5C2 can draw out wires without shortening the transmission distance compared to the double spiral type coil structure (conventional DD coil, i.e., Double D coil) shown in Fig. 1C or the hybrid type coil structure shown in Fig. 1D.

In the case of the double spiral type coil structure (conventional DD coil, i.e., Double D coil) shown in Fig. 1C or the hybrid type coil structure shown in Fig. 1D, the structure is such that two spiral coils (23 and 24 or 25 and 26) are wound on the top (on the positive side in the Z-axis direction) of the ferrite core 1 which is a magnetic material (i.e., two planar spiral coils 23 and 24 or 25 and 26) are arranged on the top (on the positive side in the Z-axis direction) of the ferrite core 1. As the wires to draw out the coil windings to the outside, it is necessary to take effort such as passing them above the spiral coils to increase the overall thickness or devising the winding method of dividing the ferrite core so that they can pass between the spiral coils without changing the overall thickness.

However, with the coil structure for the wireless power supply device shown in Figs. 3 to 5C2 of the present invention, the stepped spiral coils 31, 32 can be drawn out to the outside using the thickness portion in the Z-axis direction of the ferrite core 11. Thus, there is no need to increase the thickness of the entire coil structure, and also no need to devise the winding method of the coils. Thus, there is no effort required, and the coil windings can be drawn out to the outside without shortening the transmission distance.

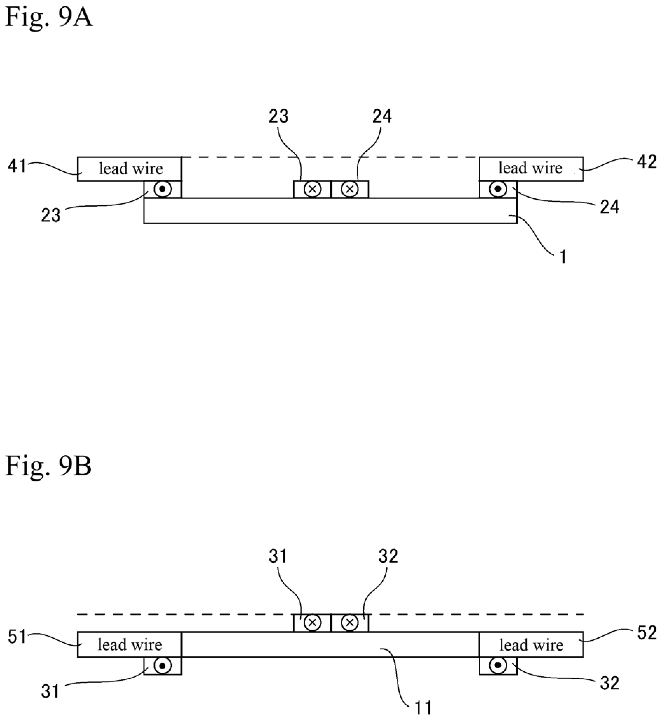

Figs. 9A and 9B are explanatory drawings comparing the lead wires of the spiral coils of the coil structure for the wireless power supply device according to Embodiment 1 of the present invention with the lead wires of the conventional spiral coils shown in Fig. 1C. Fig. 9A is a view of the cross-section near the center in the Y-axis direction of the conventional double spiral type coil structure shown in Fig. 1C seen from the front side. Fig. 9B is a view of the cross-section near the center in the Y-direction of the coil structure shown in Fig. 3 and Fig. 5A1 with the solenoid coil 33 omitted for comparison with Fig. 9A (i.e., a view of the cross-section at the dash-dotted line in Fig. 5A1) seen from the direction of arrow A with only the solenoid coil 33 omitted.

As shown in Fig. 9A, in the case of the conventional double spiral type coil structure, the structure is such that two spiral coils 23, 24 are wound on the top (on the positive side in the Z-axis direction) of the ferrite core 1 which is a magnetic material. Thus, the lead wires 41, 42 for drawing out the coil windings to the outside pass further above (on the positive side in the Z-axis direction of) the spiral coils 23, 24.

For example, if the outer diameter of the winding is 10 mm and the transmission distance is 10 cm (= 100 mm) and there is no lead wires 41, 42, in the case of Fig. 9A, the lead wires necessarily overlap with the windings of the spiral coils 23, 24. Thus, the transmission distance becomes shorter by the amount of the outer diameter of the winding. In the above described example, the transmission distance becomes 100 mm - (winding outer diameter 10 mm + winding outer diameter 10 mm) = 80 mm. Since the transmission distance changes from 10 cm to 8 cm, the impact is large. As described above, there is a disadvantage that the transmission distance becomes shorter because the lead wires and the windings of the spiral coils 23, 24 overlap and the overall thickness of the coil structure increases.

On the other hand, as shown in Fig. 9B, in the case of the coil structure for the wireless power supply device according to Embodiment 1 of the present invention, the structure is such that two stepped spiral coils 31, 32 are wound diagonally from the top (on the positive side in the Z-axis direction) to near the bottom (on the negative side in the Z-axis direction) of the ferrite core 11. Thus, the lead wires 51, 52 for drawing out the coil windings to the outside can use the thickness portion in the Z-axis direction of the ferrite core 11. As a result, the overall thickness of the coil structure does not change even when the lead wires are drawn out from the coil windings. Thus, there is an advantage that the wires can be drawn out without shortening the transmission distance. Namely, the transmission distance can be kept long.

Furthermore, regarding the cooling of the coil windings of the coil structure for the wireless power supply device, it will be explained that the coil structure for the wireless power supply device according to Embodiment 1 of the present invention shown in Figs. 3 to 5C2 is superior to the double spiral type coil structure (conventional DD coil i.e., Double D coil) shown in Fig. 1C or the hybrid type coil structure shown in Fig. 1D.

In actual operation (continuous operation), it is necessary to cool the coil windings by water cooling or air cooling. However, with the current double spiral type coil structure (conventional DD coil i.e., Double D coil) shown in Fig. 1C or the hybrid type coil structure shown in Fig. 1D, it is difficult to cool the coil windings. Since the ferrite core has very poor thermal conductivity, even if the ferrite core is cooled, the coil windings do not cool down. Thus, it is necessary to cool the coil windings directly. However, with the conventional coil structures shown in Fig. 1C and Fig. 1D, there is no way to directly access the coil windings.

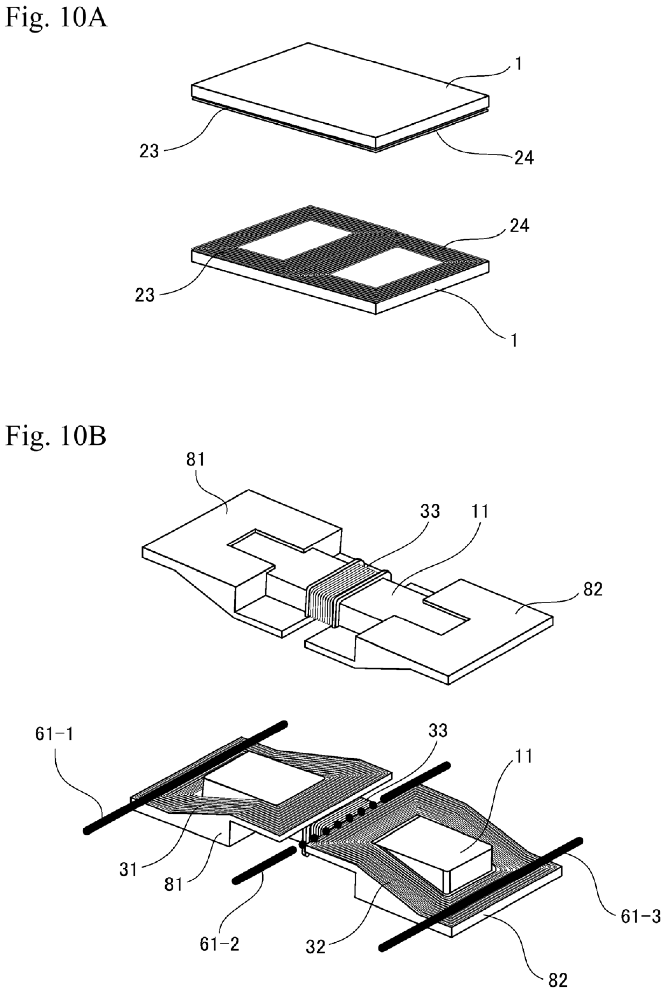

Figs. 10A and 10B are explanatory drawings comparing the arrangement example of a water pipe for cooling the coil structure for the wireless power supply device according to Embodiment 1 of the present invention with the conventional coil structure shown in Fig. 1C. Fig. 10A is a drawing showing an example in which two coils, a power supply side coil and a power receiving side coil, are arranged for the double spiral type coil structure shown in Fig. 1C. However, the spiral coils 23, 24 cannot be accessed from the back side of the ferrite core 1, and the spiral coils 23, 24 side is a transmission space. Thus, if the water pipe for cooling is provided, there is a problem that the practical transmission distance becomes shorter. Therefore, the water pipe for cooling cannot be arranged.

On the other hand, Fig. 10B is a drawing showing an example in which two coils, a power supply side coil and a power receiving side coil, are arranged for the coil structure for the wireless power supply device according to Embodiment 1 of the present invention, and the water cooling pipe 61 (61-1, 61-2, 61-3) is shown only on the lower coil (power receiving side coil) in Fig. 10B with thick lines.

In the case of the coil structure for the wireless power supply device according to Embodiment 1 of the present invention, as shown in Fig. 10B, because the spiral coils 31, 32 have steps, it becomes possible to arrange the water pipe for cooling at the positions of the water cooling pipe 61-1, 61-2, 61-3 shown with thick lines. Note that the thick dashed line portions indicate portions that pass through the back side and cannot be seen.

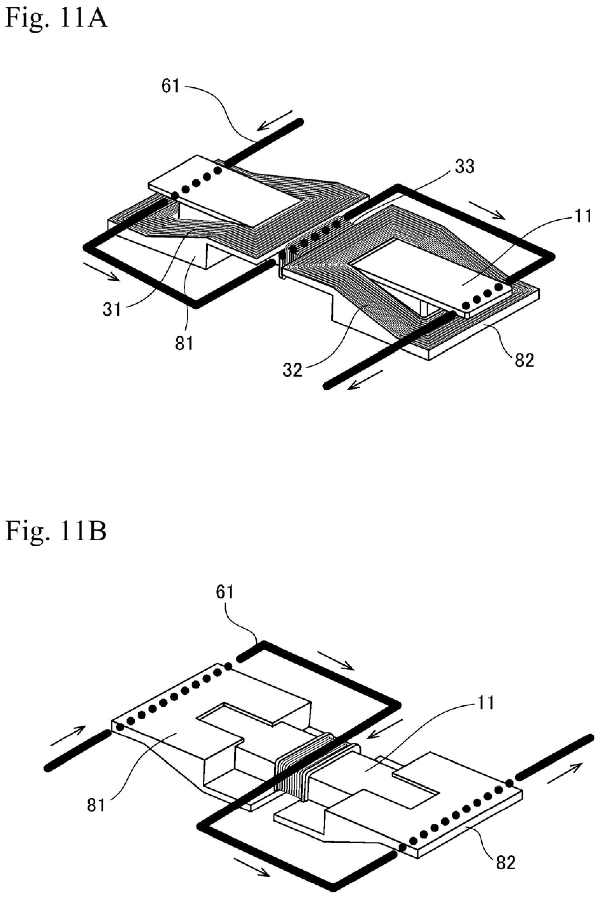

Figs. 11A and 11B are drawings showing a specific arrangement example of the water pipe for cooling the coil structure for the wireless power supply device according to Embodiment 1 of the present invention. Fig. 11A is a view of either the power supply side coil or the power receiving side coil seen from the front side (top surface side). Fig. 11B is a view seen from the back side (bottom surface side). The water cooling pipe 61 is shown with thick lines, and the arrows indicate the direction in which cold water flows through it. Also in this figure, the thick dashed line portions indicate portions that pass through the back side and cannot be seen.

The specific winding method of the coils and the lead wires (how to draw them out) of the coil windings will be described later. However, in the first place, heat does not escape easily when the coil windings are bundled together as mentioned above. Thus, it is explained here that the coil windings are wound so that they are lined up in a row without being bundled together. According to the coil structure for the wireless power supply device according to Embodiment 1 of the present invention, as shown in Figs. 10A and 10B and Figs. 11A and 11B, there is also an advantage that the coil windings can be cooled by arranging the water cooling pipe 61 for cooling the coil windings.

As described above, according to the coil structure for the wireless power supply device according to Embodiment 1 of the present invention, each spiral coil 31, 32 is provided with a step, and the solenoid coil 33 is wound between the two spiral coils 31, 32. Thus, a longer transmission distance between the power supply side coil and the power receiving side coil can be maintained and the transmission power efficiency can be increased. Thus, a higher performance wireless power supply device can be achieved. Furthermore, since the step is provided in the spiral coils 31, 32, the performance of the wireless power supply device is not degraded by the lead wires of the coils. Furthermore, it becomes possible to arrange the water cooling pipes for cooling the coil windings.

### Embodiment 2

As shown in Figs. 5A1, 5A2, 5B1, 5B2, 5C1 and 5C2 of Embodiment 1, there are various variations in the length in the left-right direction (X-axis direction) of the ferrite core (magnetic core) which is a magnetic material, and it is confirmed that any of these structures has sufficiently high performance (high transmission distance and high transmission power efficiency). Furthermore, it is confirmed that higher performance can be achieved by adjusting the length in the left-right direction (X-axis direction) of the ferrite core.

However, since it is not possible to know which length (length in the X-axis direction) of the ferrite core to use as the magnetic material will provide the highest performance without actually trying it, it is not possible to confirm which of the ferrite cores shown in Figs. 5A1, 5B1 and 5C1 should be used before winding the spiral coils 31, 32.

Here, the adjustment of the resonance frequency, which is considered important in the wireless power supply device, will be explained. Since the ferrite materials and the capacitors have variations in their characteristics, there is a problem that it is difficult to adjust the resonance frequency of the resonance circuits (power supply side resonance circuit, power receiving side resonance circuit) to a specified value. As a method for adjusting the resonance frequency, a method of adjusting the number of windings of the coils (power supply side coil, power receiving side coil) and a method of adjusting the capacitance of the capacitor can be considered. However, in the case of the method of adjusting the number of windings of the coils, work such as unwinding or adding windings is necessary after the coil windings are wound, which is difficult for production products. Furthermore, even if trying to adopt the method of adjusting the capacitance of the capacitor, since the capacitors only exist with standard capacitances in the first place, it is also difficult to adjust the capacitance of the capacitor.

As a means to solve the above described problem, as shown in Figs. 5A1, 5B1 and 5C1, the resonance frequency can be changed by using ferrite cores with different lengths in the left-right direction (X-axis direction). However, as described above, even if it is found that the length should be a little longer or a little shorter after the coil windings are wound, it is difficult to adjust the length.

Therefore, as shown in Figs. 12A to 12C, it is considered to make magnetic pole plates 13 attachable to a ferrite base (magnetic base) 12 having the same length (length in the X-axis direction) as the ferrite core (magnetic core) 11 shown in Fig. 5C1. Namely, in Embodiment 2, the ferrite core 11 is composed of a ferrite base 12 having substantially the same shape as the ferrite core 11 and two magnetic pole plates 13 attachable to the ferrite base 12. In Figs. 12A to 12C, each of the two magnetic pole plates 13 is explained as the magnetic pole plate 13 with a thickness thinner than the thickness (thickness in the Z-axis direction) of the ferrite base 12.

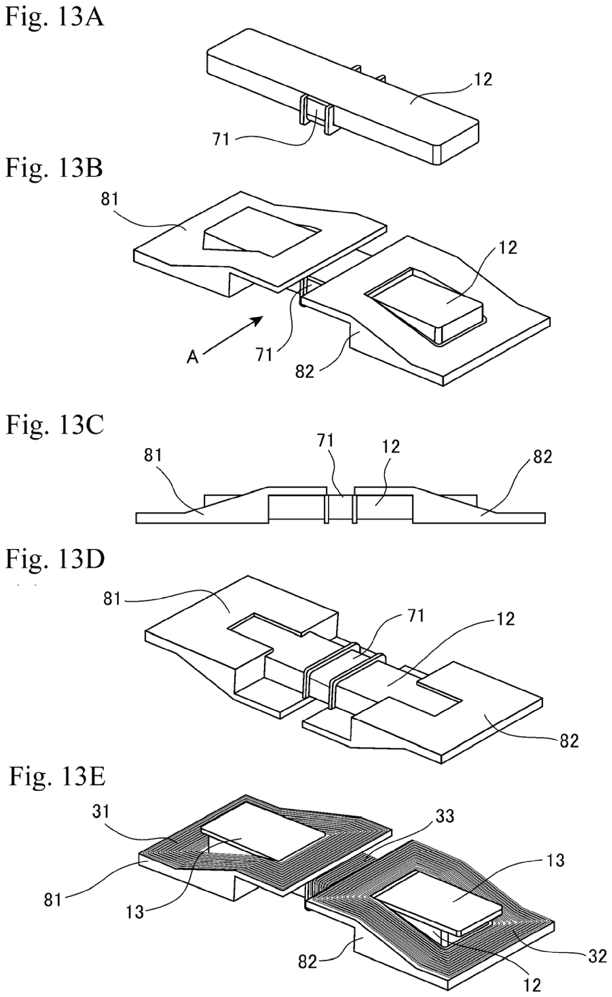

Figs. 12A to 12C are schematic drawings showing the coil structure for the wireless power supply device according to Embodiment 2 of the present invention with three variations same as Figs. 5A1, 5A2, 5B1, 5B2, Fig. 5C1 and 5C2. Here, the coil windings (spiral coils 31, 32 and solenoid coil 33) are not shown for explanatory purposes, and only the winding frames 81, 82, 71 for each coil and the ferrite base 12 and the magnetic pole plates 13 are shown. The winding frames 81, 82, 71 will be described later in Figs. 13A to 13E.

In all of Figs. 12A, 12B and 12C, the length in the left-right direction (X-axis direction) of the ferrite base 12 is the shortest length as shown in Fig. 5C1 and5C2. However, the magnetic pole plates 13 with different lengths (lengths in the X-axis direction) are attached to the top (on the positive side in the Z-axis direction) of the ferrite base 12.

Namely, in Fig. 12A, two magnetic pole plates 13 are attached such that they have the same length in the left-right direction (X-axis direction) as the ferrite core 11 in Figs. 5A1 and 5A2 when the ferrite base 12 and the two magnetic pole plates 13 are combined. In Fig. 12B, two magnetic pole plates 13 are attached such that they have the same length in the left-right direction (X-axis direction) as the ferrite core 11 in Figs. 5B1 and 5B2 when the ferrite base 12 and the two magnetic pole plates 13 are combined. In Fig. 12C, two magnetic pole plates 13 are attached such that they have the same length in the left-right direction (X-axis direction) as the ferrite core 11 in Figs. 5C1 and 5C2 when the ferrite base 12 and the two magnetic pole plates 13 are combined.

In each of Figs. 12A, 12B and 12C, each of the two magnetic pole plates is attached corresponding to each of the two spiral coils 31, 32, and is configured to be attachable to the top (on the positive side in the Z-axis direction) of the ferrite base 12 after the spiral coils 31, 32 are wound. In the example shown in Figs. 12A to 12C, three types of magnetic pole plates 13 with different sizes only in the X-axis direction length are prepared, and the magnetic pole plate 13 to be attached to the ferrite base 12 is configured to be replaceable with an appropriate size from among those three types. Note that the two magnetic pole plates 13 are the same size in each of the examples shown in Figs. 12A, 12B and 12C. However, since there may be cases where the two magnetic pole plates are not the same size (not left-right symmetrical), they do not necessarily need to be the same size.

Here, the three types of magnetic pole plates 13 shown in Figs. 12A, 12B and 12C are used as examples for explanation. However, the magnetic pole plates 13 are not limited to three types. If multiple types with different sizes only in the X-axis direction length are prepared, the resonance frequency can be adjusted by replacing the magnetic pole plate 13 to be attached to the ferrite base 12 with an appropriate size from among the multiple types. Furthermore, since the magnetic pole plates can be easily cut and adjusted, there is no need to prepare multiple types, and it is sufficient if magnetic pole plates 13 of different sizes can be attached to the ferrite base 12.

Although not shown in the figure, the two magnetic pole plates 13 may be attachable not to the top (on the positive side in the Z-axis direction) of the ferrite base 12, but to the left and right end portions (the end side surface on the positive side in the X-axis direction and the end side surface on the negative side) of the ferrite base 12. Even in this case, each of the two magnetic pole plates is attached corresponding to each of the two spiral coils 31, 32, and is configured to be attachable to the left and right end portions (the end side surface on the positive side in the X-axis direction and the end side surface on the negative side) of the ferrite base 12 after the spiral coils 31, 32 are wound. Also in this case, the two magnetic pole plates 13 do not need to be the same size.

As described above, in Embodiment 1, the experiments were also conducted for cases using a ferrite core 11 with a shortened length in the left-right direction (X-axis direction) by cutting both end portions in the X-axis direction of the ferrite core 11, and the transmission distance and transmission power efficiency were confirmed, and it was confirmed that these structures also have sufficiently high performance. However, in Embodiment 2, the experiments were conducted by attaching the magnetic pole plates 13 with different sizes only in the left-right direction (X-axis direction) length to the ferrite base 12, and by changing the length of the attached magnetic pole plates 13, the transmission distance and transmission power efficiency were confirmed, and it was confirmed that they have sufficiently high performance similar to Embodiment 1. Furthermore, it was confirmed that higher performance can be achieved by adjusting the length in the left-right direction (X-axis direction) of the magnetic pole plates 13 attached to the top (on the positive side in the Z-axis direction) of the ferrite base 12 or the left and right end portions (the end side surface on the positive side in the X-axis direction and the end side surface on the negative side) in this way.

Furthermore, in the case of the coil structure of Embodiment 2, since the magnetic pole plates 13 can be attached after the coil windings (spiral coils 31, 32, solenoid coil 33) are wound around the ferrite base 12, there is a further advantage that the resonance frequency can be adjusted by attaching magnetic pole plates 13 of more optimal length according to the variation in the characteristics of the ferrite core composed of the ferrite base 12 plus two magnetic pole plates 13. Namely, since the coil structure according to the embodiment of the present invention is adopted, the resonance frequency can be adjusted by attaching the magnetic pole plates 13 of different sizes (lengths in the X-axis direction).

Here, how to make the coil structure according to Embodiments 1 and 2 of the present invention will be explained, including that a winding frame made of a resin for winding the coils is necessary in an actual wireless power supply device. Note that the coil structure of Embodiment 1 is also almost the same in terms of how to make it, with only the difference of whether magnetic pole plates 13 are finally attached to the ferrite base 12.

Figs. 13A to 13E are explanatory drawings showing how to make the coil structure for the wireless power supply device according to Embodiment 2 of the present invention. First, as shown in Fig. 13A, the winding frame 71 made of a resin for the solenoid coil 33 is attached to the central portion (center in the X-axis direction) of the ferrite base 12. Next, as shown in Fig. 13B, the winding frames 81, 82 made of a resin for the two stepped spiral coils 31, 32 are attached to both sides of the ferrite base 12. Fig. 13C is a front view of Fig. 13B seen from the direction of arrow A. Fig. 13D is a view of Fig. 13B seen from the back side (bottom surface side).

Then, the coil windings are wound around here. The coil winding method will be described later with reference to Figs. 14A to 14D. Finally, as shown in Fig. 13E, the magnetic pole plates 13 are attached to the top (on the positive side in the Z-axis direction) of the ferrite base 12 or the left and right end portions (the end side surfaces on the positive side and the negative side in the X-axis direction). This completes the coil structure for the wireless power supply device according to Embodiment 2 of the present invention.

Next, the coil winding method before the procedure of Fig. 13E above will be explained. Figs. 14A to 14D are explanatory drawings showing how to wind the coils of the coil structure for the wireless power supply device according to Embodiment 2 of the present invention.

First, as shown in Fig. 14A, from the outer portion at the lower right of the figure (i.e., the portion indicated by arrow [1] in the figure), the spiral coil 32 is started to be wound on the winding frame 82 made of a resin, and wound from the outside toward the inside in a substantially rectangular or a substantially annular shape. Since the end portion of the right stepped spiral coil 32 is at the innermost part of the low step portion on the right side. From there, as indicated by arrow [2], the coil passes through the top of the diagonal coil winding and through the back side of the winding frame 82 made of a resin at high step portion (dashed arrow [3] portion), and the portion of the solenoid coil 33 is started to be wound.

The portion of the solenoid coil 33 is started to be wound from arrow [4], wound round from right to left in the figure around the winding frame 71 for solenoid coil made of a resin attached to the ferrite base 12. After the winding is finished at the portion indicated by arrow [5], the coil passes diagonally through the back side of the winding frame 81 made of a resin from there to the lower left (shown in Fig. 14D described later) as indicated by dashed arrow [6] in Fig. 14B, and the spiral coil 31 is started to be wound on the winding frame 81 made of a resin from the lower left (see arrow [7] in the figure). The spiral coil 31 and the spiral coil 32 are wound so that the coil winding direction is opposite.

Similar to the spiral coil 32, the spiral coil 31 is wound from the outside toward the inside in a substantially rectangular or a substantially annular shape. Since the end of the left stepped spiral coil 31 is at the innermost part of the low step portion on the left side, the coil winding is drawn out to the outside from there as indicated by arrow [8] in Fig. 14C, and that is the end. Fig. 14D is a view from the back side (bottom surface side) of the winding frames 81, 82 made of a resin after the coil windings are wound in the above described way.

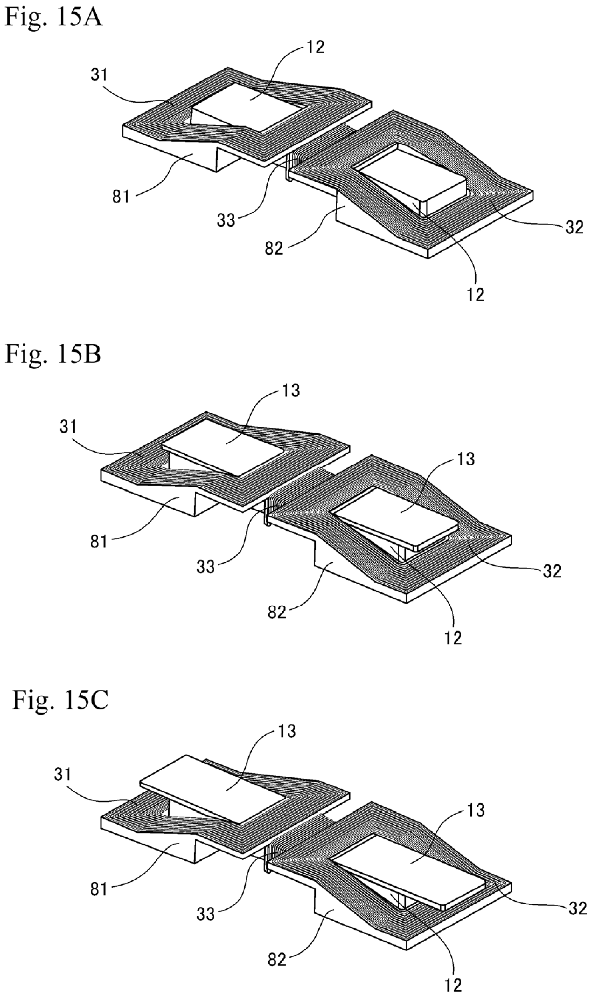

As explained in Figs. 14A to 14D, after the coil windings are wound, the magnetic pole plates 13 are finally attached. Thus, the coil structure for the wireless power supply device is completed according to Embodiment 2 of the present invention. Figs. 15A to 15C are explanatory drawings showing how to attach the magnetic pole plates of the coil structure for the wireless power supply device according to Embodiment 2 of the present invention. Also in Figs. 15A to 15C, the case of attaching the magnetic pole plates 13 to the top (on the positive side in the Z-axis direction) of the ferrite base 12 will be explained as an example.

Fig. 15A shows a state before the magnetic pole plates 13 are attached to the ferrite base 12. Fig. 15B shows a state where the magnetic pole plates 13 with a length (length in the X-axis direction) up to about the same position as shown in Fig. 12B are attached. Fig. 15C shows a state where the magnetic pole plates 13 with the longest length in the X-axis direction are attached as shown in Fig. 12A. As for how to attach the magnetic pole plates 13, the magnetic pole plates 13 may be attached with double-sided tape, for example.

Here, when the length in the X-axis direction of the magnetic pole plates 13 was changed little by little and the resonance frequency of the wireless power supply device was compared, it was found that the resonance frequency can be lowered by about 1 kHz by extending the magnetic pole plates 13 by 1 cm. As a result, individual differences due to parts can be absorbed by adjusting the length of these magnetic pole plates 13 after winding the coil windings. Thus, it becomes possible to use in the state with the highest performance by attaching the magnetic pole plates 13 after finishing winding the coil windings.

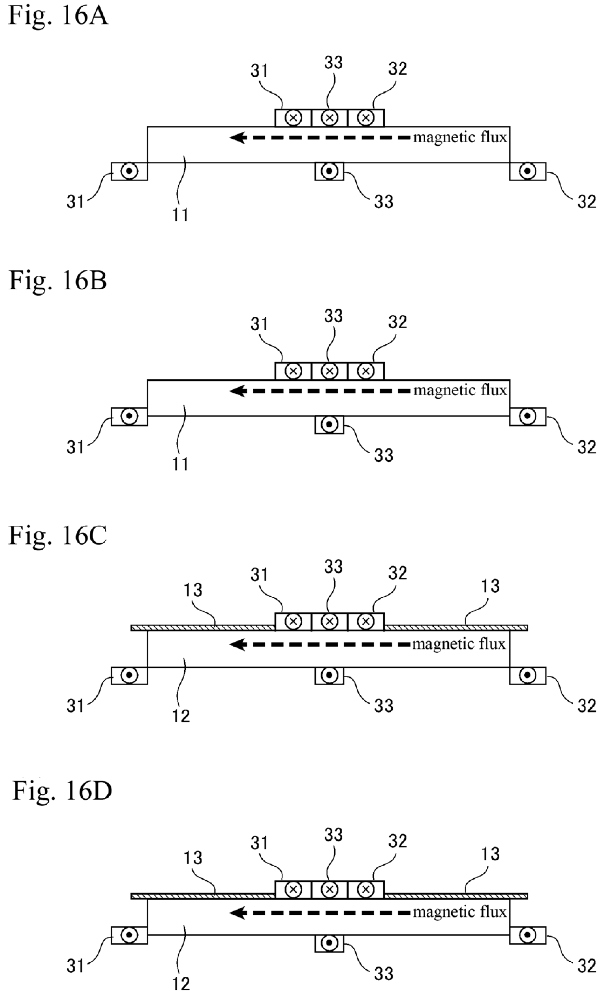

Figs. 16A to 16D are explanatory drawings showing the positional relationship between the magnetic flux passing through the inside of the ferrite core and the coils in the coil structures for the wireless power supply device according to Embodiments 1 and 2 of the present invention. Figs. 16A and 16B correspond to Embodiment 1. Figs. 16C and 16D correspond to Embodiment 2. Fig. 16A is a drawing with exactly the same structure as Fig. 5C2, with only dashed arrows indicating the magnetic flux passing through the inside of the ferrite core 11 added. Note that the magnetic flux flows as shown in Fig. 5A2 and Fig. 8. However, in Figs. 16A to 16D, only the magnetic flux passing through the inside of the ferrite core 11 is shown.

Both Figs. 16A and 16B show that the spiral coils 31, 32 are arranged below (on the negative side in the Z-axis direction of) the magnetic flux passing through the inside of the ferrite core 11 in portions far from the solenoid coil 33 (near the end portions of the length in the X-axis direction of the ferrite core 11), with only a slight difference in the vertical position. Namely, in Fig. 16A, the coils at both ends are arranged completely at the bottom (on the negative side in the Z-axis direction) of the ferrite core 11. However, in Fig. 16B, they are not completely at the bottom of the ferrite core 11 but are arranged slightly higher than in Fig. 16A. This is shown in the figure to explain that even with such an arrangement, as long as they are arranged below (on the negative side in the Z-axis direction of) the magnetic flux passing through the inside of the ferrite core 11, they are included in the coil structure of the present invention.

Similarly, both Figs. 16C and 16D show that the spiral coils 31, 32 are arranged below (on the negative side in the Z-axis direction of) the magnetic flux passing through the inside of the ferrite base 12 (i.e., the ferrite core 11) in portions far from the solenoid coil 33 (near the end portions of the length in the X-axis direction of the ferrite base 12), with only a slight difference in the vertical position. Namely, in Fig. 16C, the coils at both ends are arranged completely at the bottom (on the negative side in the Z-axis direction) of the ferrite core 11. However, in Fig. 16D, they are not completely at the bottom of the ferrite core 11 but are arranged slightly higher than in Fig. 16C. However, even in the above described case, the spiral coils 31, 32 are arranged below (on the negative side in the Z-axis direction of) the magnetic flux passing through the inside of the ferrite core 11.

As described above, also in the case of the coil structure for the wireless power supply device according to Embodiment 2, similar to Embodiment 1, the two spiral coils 31, 32 are stepped spiral coils wound multiple times from the outside toward the inside in a substantially rectangular or substantially annular shape such that a step is provided in the vertical direction (Z-axis direction) between the vicinity of the center and the vicinity of the end portions in the X-axis direction. The two spiral coils 31, 32 are arranged on the left and right (on the positive side and the negative side in the X-axis direction with the solenoid coil 33 as the center) with respect to the solenoid coil 33. In portions close to the solenoid coil 33 (near the center of the length in the X-axis direction of the ferrite core 11), the two spiral coils 31, 32 are arranged above (on the positive side in the Z-axis direction of) the magnetic flux passing through the inside of the ferrite core 11. In portions far from the solenoid coil 33 (near the end portions of the length in the X-axis direction of the ferrite core 11), the two spiral coils 31, 32 are arranged below (on the negative side in the Z-axis direction of) the magnetic flux passing through the inside of the ferrite core 11.

As described above, according to the coil structure for the wireless power supply device according to Embodiment 2 of the present invention, similar to Embodiment 1, each spiral coil 31, 32 is provided with a step, and the solenoid coil 33 is wound between these two spiral coils 31, 32. Thus, a longer transmission distance between the power supply side coil and the power receiving side coil can be maintained and the transmission power efficiency can be increased. Thus, a higher performance wireless power supply device can be achieved. Furthermore, since a step is provided in the spiral coils 31, 32, the performance of the wireless power supply device is not degraded by the lead wires of the coils. Furthermore, it becomes possible to arrange the water cooling pipe for cooling the coil windings.

Furthermore, according to Embodiment 2, since the length in the left-right direction (X-axis direction) of the two magnetic pole plates 13 attached to the ferrite base 12 can be adjusted after winding the coil windings, there is a further advantage that the resonance frequency can be adjusted by attaching magnetic pole plates 13 of more optimal length according to the variation in the characteristics of the ferrite core composed of the ferrite base 12 plus two magnetic pole plates 13.

Within the scope of the present invention, free combinations of the embodiments, modifications of any constituent elements of the embodiments, or omissions of any constituent elements in the embodiments are possible.

### Industrial Applicability

The coil structure for a wireless power supply device of the present invention can be applied as a coil structure for wireless power supply devices in various fields requiring wireless power supply, such as electronic devices and electric vehicles.

### Description of symbols

1, 10, 11: ferrite core (magnetic material)
12: ferrite base (magnetic base)
13: magnetic pole plate
21: spiral coil
22, 27, 33: solenoid coil
23, 24, 25, 26: planar spiral coil constituting double spiral
31, 32: stepped spiral coil constituting double spiral
41, 42, 51, 52: lead wire of coil winding
61, 61-1, 61-2, 61-3: water cooling pipe
71: winding frame for solenoid coil 33
81, 82: winding frame for stepped spiral coils 31, 32

## Claims

1. A coil structure for a wireless power supply device, wherein
the coil structure comprises:
a magnetic core having a substantially rectangular parallelepiped-shape, the magnetic core having a left-right length in an X-axis direction as a longest side, a depth in a Y-axis direction as a second longest side and a vertical thickness in a Z-axis direction as a shortest side;
two spiral coils; and
one solenoid coil,
the one solenoid coil is a solenoid coil wound multiple times around the magnetic core only in a vicinity of a center in the X-axis direction of the magnetic core,
the two spiral coils are stepped spiral coils wound multiple times from an outside toward an inside in a substantially rectangular or substantially annular shape in a state where a step is provided in the Z-axis direction between the vicinity of the center and the vicinity of end portions in the X-axis direction so that the two spiral coils are arranged on a positive side and a negative side in the X-axis direction with the solenoid coil at the center,
the two spiral coils are arranged on the positive side in the Z-axis direction compared to a magnetic flux passing through an inside of the magnetic core in the vicinity of the center in the X-axis direction of the magnetic core which is a portion close to the solenoid coil, and
the two spiral coils are arranged on the negative side in the Z-axis direction compared to the magnetic flux passing through the inside of the magnetic core near the end portions in the X-axis direction of the magnetic core which is a portion far from the solenoid coil.

2. The coil structure for the wireless power supply device according to claim 1, wherein
the magnetic core comprises: a magnetic base having substantially same shape as the magnetic core; and two magnetic pole plates attachable to the magnetic base, and
each of the two magnetic pole plates corresponds to each of the two spiral coils, and
each of the two magnetic pole plates is configured to be attachable to the positive side of the magnetic base in the Z-axis direction or to end side surfaces on the positive side and the negative side in the X-axis direction of the magnetic base after the two spiral coils are wound.
